# EUROPÄISCHE PATENTSCHRIFT

(11) **EP 0 976 481 B1**
(45) Veröffentlichungstag und Bekanntmachung des Hinweises auf die Patenterteilung: **01.10.2003**
(21) Anmeldenummer: 99114661.4
(22) Anmeldetag: 27.07.1999
(51) Int. Cl.: B23B 31/107, B23B 31/30, B23Q 1/00, B25B 5/06

(54) **Deckelloser Schnellspannzylinder**
Quick clamping cylinder without cover
Cylindre à serrer rapide sans couverture

(30) Priorität: 29.07.1998 DE 19834040
(43) Veröffentlichungstag der Anmeldung: 02.02.2000
(73) Patentinhaber: Stark Spannsysteme GmbH, 6840 Götzis (AT)
(72) Erfinder: Stark Spannsysteme GmbH, 6840 Götzis (AT)
(74) Vertreter: von Ahsen, Erwin-Detlef, Dipl.-Ing.

(56) Entgegenhaltungen:
- DE-U- 29 615 613
- DE-U- 29 722 730

## Beschreibung

Die vorliegende Erfindung betrifft ein Verfahren zur Herstellung und Montage sowie einen nach diesem Verfahren hergestellten deckellosen Schnellspannzylinder mit Einzugsnippel zum Spannen einer Trägerplatte, auch Palette genannt, die an einer Bearbeitungsmaschine zur Fixierung von Werkstücken dient.

Um einen raschen Überblick über die Zusammenhänge zu ermöglichen werden zum technologischen Hintergrund die nachfolgenden Ausführungen gegeben.

Schnellspannzylinder nach dem Oberbegriff des Patentanspruchs 5 werden für Spannvorrichtungen zum Spannen von Werkstücken auf Trägerplatten für Bearbeitungsmaschinen benötigt. Ein derartiger Schnellspannzylinder ist beispielsweise mit dem auf den gleichen Anmelder zurückgehenden DE-GM 296 15 613 bekannt geworden. Ein solcher Schnellspannzylinder zeichnet sich dadurch aus, daß an einem nach oben offenen Gehäuse die Aufnahmen für die Halterung der Spannfedern eingearbeitet sind und daß das Gehäuse durch einen zugeordneten Deckel von oben her abgeschlossen wird. Der Deckel hat eine mittige Ausnehmung, in welcher abgedichtet und bündig der Einzugsnippel in axialer Richtung hydraulisch beaufschlagt verschiebbar ist.

Die Verwendung eines Gehäuses für den Schnellspannzylinder mit einem dazugehörenden Deckel hat jedoch Nachteile.

Die Herstellung des Deckels bedarf aufwendiger Bearbeitungsschritte, denn der Deckel muß als einzelnes Teil hochgenau bearbeitet werden; er benötigt entsprechende ringsumlaufende, am Umfang verteilt angeordnete, Durchgangsbohrungen. Ferner benötigt er eine hochgenaue Bearbeitung am Aussenumfang und an einer zugeordneten Schulter, damit er mit Übermaß, passgenau, in die nach oben offene Ausnehmung des Gehäuses eingepresst werden kann. Es wird also ein Press-Sitz verwendet, der mit einer entsprechend hochgenauen Bearbeitung des nach oben offenen Gehäuses und des zugeordneten Deckels verbunden ist.

Es ist ferner ein axialer Bund vorhanden, der an seinem Außenumfang entsprechend bearbeitet werden muß, weil sich dieser Bund hochgenau im Pass-Sitz an die Innenwandung des Zylinders anlegen muß. Es muß femer ein Einstich an diesem Bund vorgesehen werden, in welcher ein O-Ring eingelegt wird, damit der Deckel abdichtend an der Zylinderwandung des Gehäuses anliegt.

Für die Verbindung des Deckels mit dem Gehäuse des Schnellspannzylinders gibt es mehrere bekannte Ausführungsformen.

In einer ersten bekannten Ausführungsform wird der Deckel aufsitzend auf das Gehäuse des Schnellspannzylinders ausgebildet, d.h. der Schnellspannzylinder bildet einen nach oben verlängerten axialen Ansatz aus, auf dessen Stirnseite der Deckel aufgesetzt und mit entsprechenden Gewindebohrungen festgeschraubt wird. Nachteil ist, daß die Einzugskraft des durch den Deckel hindurchgreifenden Einzugsnippels so groß sein kann, daß der Deckel verformt wird.

Nachdem die Gesamthöhe des Schnellspannzylinders (die Höhe des Gehäuses des Zylinders und des Deckels) genau festgelegt ist, kann auch ein Summenfehler entstehen, wenn nämlich die beiden Höhen nicht zusammenstimmen.

Bei einer anderen Ausführungsform ist es vorgesehen, daß der Deckel in eine zugeordnete, nach oben offene Ausnehmung des Gehäuses eingesetzt wird, wobei diese Ausnehmung einen ringsumlaufenden Rand aufweist, wobei der Rand geringfügig die Oberfläche des Deckels überragt. Der Deckel wird also - wie in dem vorher genannten Gebrauchsmuster gezeigt - von dem umlaufenden Rand umfaßt und passend aufgenommen.

Hier werden zwar unzulässige Verformungen des Deckels aufgrund einer hohen Einzugskraft des Einzugsnippels vermieden, es ist aber nicht ausgeschlossen, daß bei einer auf dem Deckel aufgebrachten Aufspannpalette, welche ihrerseits ein Werkstück hält, sich die Aufspannpalette selbst verbiegt. Ebenso besteht die Gefahr, daß, wenn das Werkstück direkt auf dem Deckel aufgesetzt wird, die Spannkraft, welche vom Einzugsnippel auf das Werkstück aufgebracht wird, über den Deckel übertragen wird, der sich dann wiederum unzulässig verbiegen kann.

Des weiteren ist die Montage eines derartigen Schnellspannzylinders relativ aufwendig, weil zunächst bei entfemtem Deckel in die nach oben offene Ausnehmung des Gehäuses des Schnellspannzylinders die Federn eingesetzt werden müssen. Die Federn werden hierbei so montiert, daß diese zunächst im entspannten Zustand in das Gehäuse des Schnellspannzylinders eingesetzt werden. Dann wird der Deckel aufgesetzt und unter Einwirkung einer Presse, die auf die Oberseite des Deckels wirkt, dieser entgegen der Kraft der Federn nach innen in das Gehäuse des Schnellspannzylinders hineingepresst. Anschließend wird mit den am Deckel umlaufend angeordneten Montageschrauben der Deckel mit dem Gehäuse des Schnellspannzylinders verschraubt.

Bei dieser Anordnung besteht aber der Nachteil, daß die Verbindung des Deckels mit dem Gehäuse des Schnellspannzylinders nur unter Presskraft erfolgt, was dazu führen kann, daß während des Einpressens der Deckels bestimmte Teile am Schnellspannzylinder beschädigt werden können. Weiters müssen passgenau unter Einwirkung der Presskraft die Durchgangsbohrungen im Deckel mit den zugeordneten Gewindebohrungen im Gehäuse des Schnellspannzylinders in Übereinstimmung gebracht werden, um überhaupt eine Montage des Deckels zu ermöglichen.

Die verwendeten Montageschrauben für die Verbindung des Deckels mit dem Gehäuse des Schnellspannzylinders haben den weiteren Nachteil, daß hierdurch wertvolle Fläche auf der Oberfläche des Deckels verloren geht, die z.B. für die Anordnung von Ausblasnuten oder Ausblasbohrungen verwendet werden könnte. Diese Ausblasbohrungen müssen dann außerhalb der entsprechenden Befestigungsbohrungen im Deckel angebracht werden, was mit einem erhöhten Herstellungsaufwand, und im übrigen mit einer Schwächung der Materialstärke des Deckels verbunden ist.

Der Erfindung liegt deshalb die Aufgabe zugrunde, ein Verfahren zur Montage eines Schnellspannzylinders zu entwickeln, und einen nach dem Verfahren hergestellter Schnellspannzylinder so auszubilden, daß eine wesentlich einfachere, kostengünstigere, höher belastbare und betriebssichere Konstruktion des Schnellspannzylinders gewährleistet wird.

Zur Lösung der gestellten Aufgabe ist die Erfindung durch das Verfahren nach dem Anspruch 1 bzw. durch den Schnellspannzylinder gemäß Anspruch 5 gekennzeichnet.

Wesentlich bei dem vorliegenden Verfahren ist, daß die Montage des Schnellspannzylinders von der Kolbenseite (das ist die Bodenseite) erfolgt und nicht mehr von oben, von der Seite der Zylinderöffnung.

In einem ersten Verfahrensschritt werden deshalb in das nach unten offene Zylindergehäuse zunächst die entspannten Federn in ihre zugeordneten Ausnehmungen eingesetzt,
in einem zweiten Verfahrensschritt wird dann der Kolben in den Zylinderraum eingesetzt, und
in einem dritten Verfahrensschritt wird ein Boden in die nach unten offene Ausnehmung des Zylindergehäuses eingelegt,
in einem vierten Verfahrensschritt wird mit einer Presse dieser Boden in das Zylindergehäuse hineingepresst, bis er einen gehäusefesten Anschlag erreicht,
und in einem sechsten Verfahrensschritt wird zur Verschiebungssicherung des Bodens in axialer Richtung -auswärts gesehen- ein Seegerring eingelegt, welcher den Deckel zum Zylindergehäuse fixiert,
in einem siebten Verfahrensschritt wird der Pressdruck von dem Boden entfernt, welcher sich demgemäß unter der Kraft der Federn in axialer Richtung nach unten bewegt, und sich an den gehäusefesten Anschlag anlegt.

Alle vorher beschriebenen Bewegungsrichtungen (nach unten und nach oben) sind hierbei auf ein Ausführungsbeispiel bezogen, welches den Schnellspannzylinder in seiner Arbeitsstellung darstellt.

Diese Richtungen sind jedoch in analoger Weise zu vertauschen, wenn der Schnellspannzylinder zu Montagezwecken umgedreht wird, so daß seine Bodenseite nach oben weist.

Es wird also nochmals betont, daß die hier angegebenen Bewegungsrichtungen sich darauf beziehen, wenn der Schnellspannzylinder in seinem Betriebszustand ist.

Wesentliches Merkmal der Erfindung ist also, daß nun ein oberseitiger Deckel des Schnellspannzylinders vollkommen entfällt, weil die Oberseite des Zylindergehäuses gleichzeitig den Deckel bildet. Ein dementsprechender oberseitiger Deckel entfällt also vollständig. Statt dessen wird ein unterseitig eingesetzter Boden verwendet, der wesentliche Vorteile gegenüber dem Stand der Technik hat. Ein derartiger Boden muß nämlich überhaupt nicht präzise gefertigt werden, weil auf ihm keinerlei Spannkräfte wirken. Er muß lediglich den Öldruck aufnehmen, weil er die bodenseitige Begrenzung des Zylindergehäuses ist und auf seiner Fläche mit Öldruck belastet wird. Es besteht demgemäß keine Gefahr mehr, daß dieser Deckel durch unzulässig hohe Spannkräfte verbogen wird.

Mit der gegebenen technischen Lehre ergeben sich also mehrere Vorteile gleichzeitig:

Weil ein oberseitiger Deckel entfällt und die entsprechenden Schrauben nicht mehr notwendig sind, entfällt auch der Nachteil, daß der Deckel sich unter Wirkung der Spannkraft verbiegen könnte. Der oberseitige Teil des Zylindergehäuses der Deckenbereich kann so stark ausgebildet werden, daß eine Verbiegung dieses Bereiches nicht mehr befürchtet werden muß.

Weiterer Vorteil ist, daß wegen des Wegfalls der Befestigungsschrauben für den Deckel ein größerer Platz für die Anbringung von Ausblasbohrungen zur Verfügung steht, die demgemäß an der Oberfläche des oberseitig geschlossenen Zylindergehäuses frei angeordnet werden können. Diese Ausblasbohrungen können in einem Ausblasring angeordnet werden, der in einer umlaufenden Nut versenkt angebracht ist. Die Ausblasbohrungen sind dabei über einen Kreisumfang im Ausblasring angeordnet, so daß eine gleichmäßige Beaufschlagung von Druckluft entlang des Ringumfanges erfolgen kann. Diese Beaufschlagung bewirkt zum einen ein Ausblasen von Bohrspänen und Kühlmittel, und zum anderen den sehr wichtigen Aspekt als Sicherheitsvorkehrung zur gezielten Druckminderung der über entsprechende Bohrungen auch an der Unterseite des Einzugsnippels angreifenden Druckluft.

Durch die Beaufschlagung der Unterseite des Einzugsnippel mit Druckluft erfährt dieser eine Kraftkomponente in Richtung des Pfeiles 41, also aus dem Zylinder heraus. Diese Kraftkomponente errechnet sich aus der wirksamen Fläche an der die Druckluft angreift, und dem zur Verfügung stehenden Druck der Luft. Der Luftdruck ist in der Regel zwischen 6 bar und 10 bar wie er in Druckluftleitungen in Bearbeitungsbetrieben üblicherweise zur Verfügung gestellt wird. Mit einer wirksamen kreisförmigen Angriffsfläche im Durchmesser von beispielsweise 30 mm ergibt sich dadurch bei einer schlagartigen Druckbeaufschlagung eine geschoßartige Ausrückbewegung des Einzugsnippels nach außen. Da dieser aus dem Zylinder entnommen werden kann, besteht bei einer unkontrollierten Druckbeaufschlagung des Einzugsnippels die Gefahr daß dieser wie ein Geschoß aus dem Schnellspannzylinder ausfährt, und das Bedienpersonal gefährdet.

Um nun bei Beaufschlagung der Druckluftleitung für den Luftdruck eine gezielte Druckminderung zu erreichen, wird die Druckluft nach dem Druckluftanschluß in zwei Luftströme aufgeteilt. Ein Luftstrom wird nach unten zum Anheben des Einzugsnippels und zur Beaufschlagung der Nippelöffnung mit Druckluft nach entfernen des Nippels geleitet. Die dann aus der Nippelöffnung ausströmende Druckluft verhindert das Eindringen von Bohrspänen und anderen die Funktionsweise des Zylinders beeinträchtigenden Fremdkörpern.

Der zweite Luftstrom wird von der Verzweigung weg nach oben zum Blasring geführt. Dieser Teilstrom der beaufschlagten Druckluft wird ebenfalls zum Ausblasen des Schnellspannzylinders nach der Bearbeitung des Werkstücks verwendet. Das Ausblasen erfolgt hier jedoch an der Oberseite des Schnellspannzylinders und ist für die Reinigung der Auflagefläche für die Palette von Bohrspänen und Kühlmittel gedacht. Durch diesen abgezweigten Teilstrom der zugeführten Druckluft verringert sich der wirksame Luftdruck im Leitungssystem des Schnellspannzylinders, und somit auch an der wirksamen Angriffsfläche an der Unterseite des Einzugsnippels.

Durch gezielte Anordnung und entsprechender Ausbildung der Durchmesser der einzelnen Zuführ- und Ausblasleitungen ist es möglich den Einzugsnippel mit der notwendigen Kraft zum Ausfahren zu beaufschlagen, um diesen gefahrlos aus dem Zylinder zu entnehmen. Die Reduzierung der Druckluft erfolgt dabei unter anderem auch durch das Entweichen der Druckluft aus den Blasbohrungen im Blasring an der Oberseite des Schnellspannzylinders.

Somit wird die erfindungsgemäße Aufgabenstellung bezüglich der Sicherheitsvorkehrungen durch diese Merkmale der vorliegenden Erfindung gelöst.

Ein weiterer Vorteil ist, daß bei Zugeinwirkung auf den Einzugsnippel, in Betriebsstellung nach oben gesehen, der Einzugsnippel eine Kraft gegen die Innenseite des Gehäuses ausübt, an der Stelle wo bisher der Deckel angeordnet war. Beim Stand der Technik hatte das bei einer unzulässig hohen Krafteinwirkung zur Folge, daß die Befestigungsschrauben zwischen dem Deckel und dem Gehäuse herausgerissen oder beschädigt wurden.

Diese Gefahr besteht nach der vorliegenden Erfindung nicht mehr, da entsprechend große und stabile Anschläge im Zylindergehäuse vorgesehen werden können, die eine Beschädigung des Zylindergehäuses im Deckenbereich, wie zuvor beschrieben, vermeiden.

Dadurch werden unzulässig hohe Einzugskräfte von dem Zylindergehäuse unmittelbar auf die Halterung des Zylindergehäuses auf einer Aufspannfläche übertragen. Diese Halterung wird im folgenden als Anschlagpratze oder Bride bezeichnet.

Konstruktiv zeichnet sich der neuartige Schnellspannzylinder durch folgende wesentliche Merkmale aus:

Das Zylindergehäuse ist deckenseitig in sich geschlossen und bildet lediglich eine zentrale, mittige Ausnehmung für den Durchgriff des Einzugsnippels aus. Es ist werkstoffeinstückig mit den Seitenflächen verbunden, so daß sich ein im Profil U-förmiger Körper ergibt, der nach unten geöffnet ist und der in seinem Innenraum den Zylinderraum für die Aufnahme des Kolbens bildet.

Wichtig hierbei ist, daß die Unterseite des Zylinderraums durch den vorher genannten Boden begrenzt ist, wobei der Boden zu Montagezwecken in axialer Richtung mittels einer Presse in den Zylinderraum hinein verschoben werden kann, um die im Inneren des Gehäuses angeordneten Federn entsprechend zu spannen.

Es ist ferner eine Anschlagbegrenzung für diesen Boden vorhanden, die verhindert, daß der Boden nach außen aus dem Zylindergehäuse verschoben wird. Im übrigen ist dieser Boden ortsfest und abgedichtet in dem Zylindergehäuse angeordnet und bildet die untere Begrenzung des Ölraumes.

In einer Weiterbildung der Erfindung ist es vorgesehen, daß die dem Kolben gegenüberliegende Anlagefläche für die Federn des Spannzylinders aus einem federnden Anschlag besteht, welcher bevorzugt werkstoffeinstückig mit dem Zylindergehäuse ausgebildet ist. Dieser Anschlag bildet also das Anlagelager für die Feder, wodurch demgemäß der Federdruck von der oberseitigen Begrenzung des Zylindergehäuses ferngehalten wird.

Es wird also ein gesonderter Anschlag für das Federpaket gebildet, so daß die Federwirkung nicht unmittelbar auf die deckenseitige Begrenzung des Zylindergehäuses übertragen wird.

Statt eines gehäusefesten, federnden Anschlages kann aber auch ein lösbarer Anschlag in Form eines Seegerringes verwendet werden.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand mehrerer, unterschiedliche Ausführungswege darstellende Zeichnungen näher erläutert. Hierbei gehen aus den Zeichnungen und ihrer Beschreibung weitere erfindungswesentliche Merkmale und Vorteile der Erfindung hervor.

Die Zeichnungen stellen folgende Merkmale dar:
- Figur 1:: Eine geteilte Schnittdarstellung des Schnellspannzylinders mit zur Hälfte eingefahrenen (links) und zur anderen Hälfte ausgefahrenen Einzugsnippel (rechts)
- Figur 2:: Ebenfalls eine Schnittdarstellung des erfindungsgemäßen Schnellspannzylinders in einer weiteren Ausführungsform
- Figur 3:: Draufsicht des erfindungsgemäßen Schnellspannzylinders nach Figur 2
- Figuren 4 bis 11:: Unterschiedliche Schnittdarstellungen des erfindungsgemäßen Schnellspannzylinders in einer weiteren Ausführungsform
- Figuren 12 und 13:: Eine weitere Ausführungsform des Schnellspannzylinders in der Form einer Einbauausführung

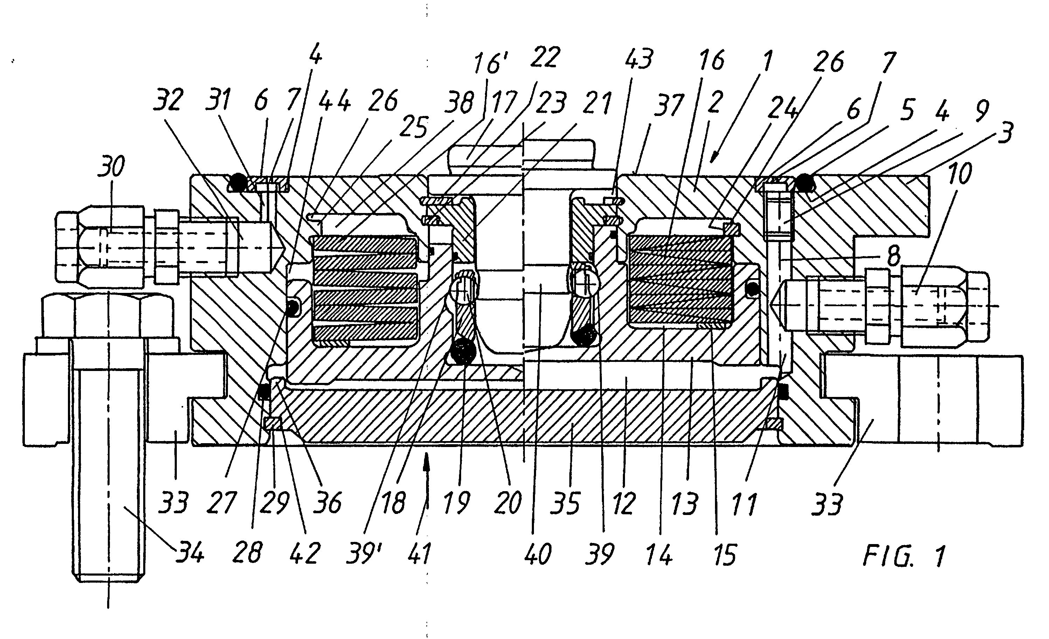

Generell sei zur Abbildung in Figur 1 angemerkt, daß sie aus zwei Teilschnitten besteht, wobei der linke Halbschnitt den Schnellspannzylinder 1 in gespanntem Zustand zeigt, während der rechte Halbschnitt den Schnellspannzylinder 1 im gelösten Zustand zeigt. Die rechte Hälfte zeigt über dies einen Seegerring 24, der alternativ zu dem auf der linken Hälfte befindlichen Einstich 26 ist. Der Schnellspannzylinder kann deshalb entweder nun mit dem Seegerring 24 oder nur mit dem Einstich 26 verwirklicht werden.

Die Abbildung in Figur zeigt also ein bevorzugtes Ausführungsbeispiel eines Schnellspannzylinders 1. Er besteht im wesentlichen aus einem Gehäuse 2, welches - wesentlich für die vorliegende Erfindung - in seinem oberen Bereich in sich geschlossen ist und demgemäß einen geschlossenen Deckenbereich ausbildet, der werkstoffeinstückig mit dem Gehäuse 2 ausgebildet ist Demgemäß geht dieser Bereich in die Seitenflanken über, so daß dieses Gehäuse 2 ein Rundteil ausbildet, der unter anderem den Ölraum 12 bildet.

An dem Gehäuse sind ein oder mehrere Ansätze 3 angeformt, wobei die Ansätze unterschiedliche Profilformen aufweisen können. Ein derartiger Ansatz 3 kann als Quadrat, als Polygon, oder als unrunder Ansatz ausgebildet sein. Er dient dazu, eine darüber angeordnete und nicht näher dargestellte Aufspannpalette zu tragen und gegen Verdrehung zu sichern.

Die Aufspannpalette ihrerseits bildet eine zentrale Ausnehmung, in welche der Einzugsnippel 17 hineinragt. Der Einzugsnippel 17 ist - in nicht näher dargestellter Weise - mit einem Spannelement verbunden, wobei das Spannelement dann mit dem aufzuspannenden Werkzeug zusammenwirkt.

Der Schnellspannzylinder 1 ist mittels einer Anschlagpratze 33 und zugeordneten Schrauben 34 auf einer nicht näher dargestellten Lochrasterpalette hochgenau aufgespannt.

Ebenso ist eine Aufspannung auf einem T-Nutentisch vorgesehen.

Wichtig ist, daß nun der Deckenbereich 37 des Gehäuses 2 von Einbauten frei ist. In diesem Bereich ist also kein Deckel mehr angeordnet, wie er in dem älteren Gebrauchsmuster beschrieben wurde. Damit besteht der Vorteil, daß in diesem gesamten, freien Deckenbereich 37 es nun sehr einfach möglich ist, eine zugeordnete, umlaufende Nut 4 einzuarbeiten, in welche, im gezeigten Ausführungsbeispiel ein O-Ring 5 in Verbindung mit einem Blasring 6 eingelegt ist. Der Blasring 6 ist ein Metalloder Kunststoffteil und weist an der Oberseite verteilt eine Reihe von Blasbohrungen 7 auf, durch welche Preßluft nach oben abgegeben werden kann um Verunreinigungen wie Späne zu entfernen.

Der O-Ring 5 verhindert, daß Spritz- oder Tauchwasser von außen her in Richtung auf den Einzugsnippel 17 und die vom Einzugsnippel eingenommene Ausnehmung im Gehäuse 2 eindringt.

Der O-Ring 5 dichtet also mit darauf liegender (nicht zeichnerisch dargestellten) Aufspannpalette ab.

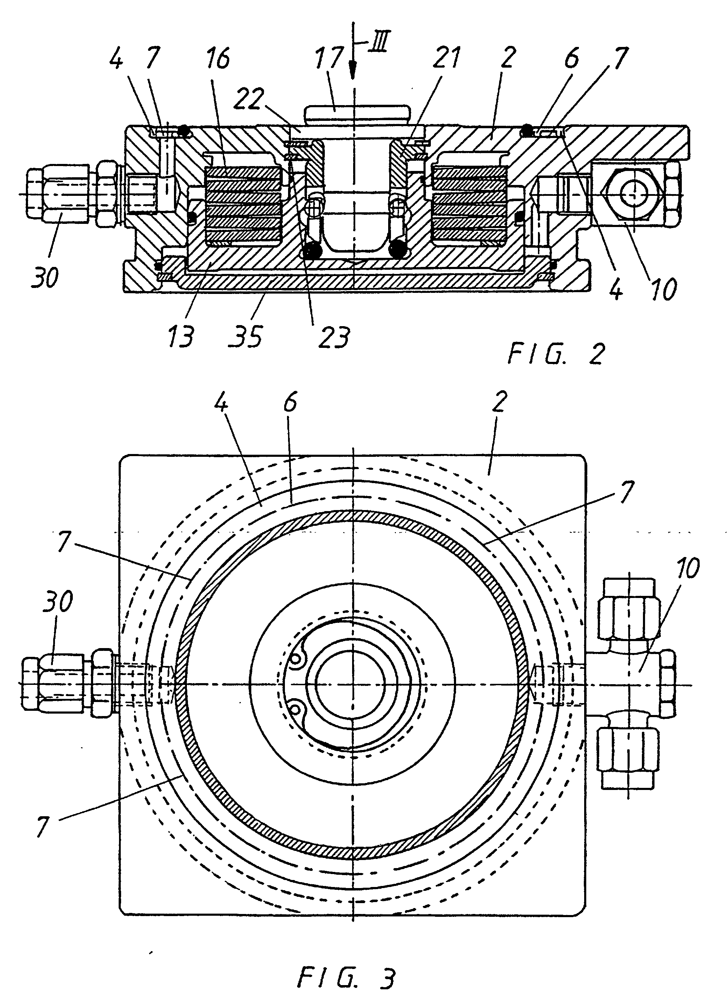

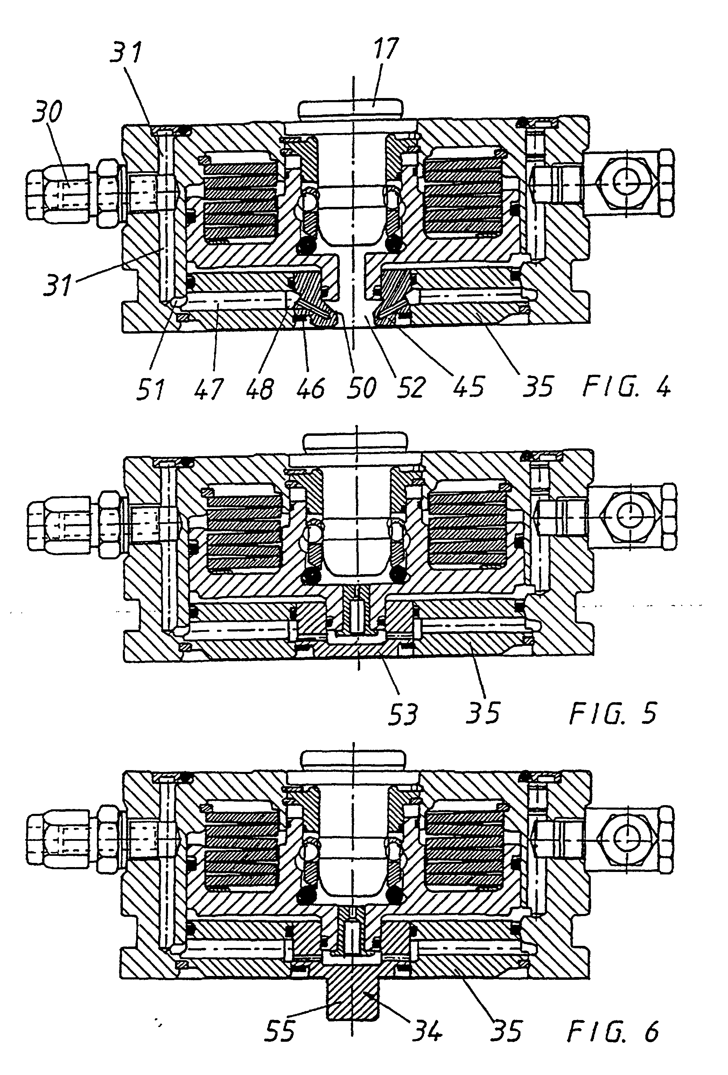

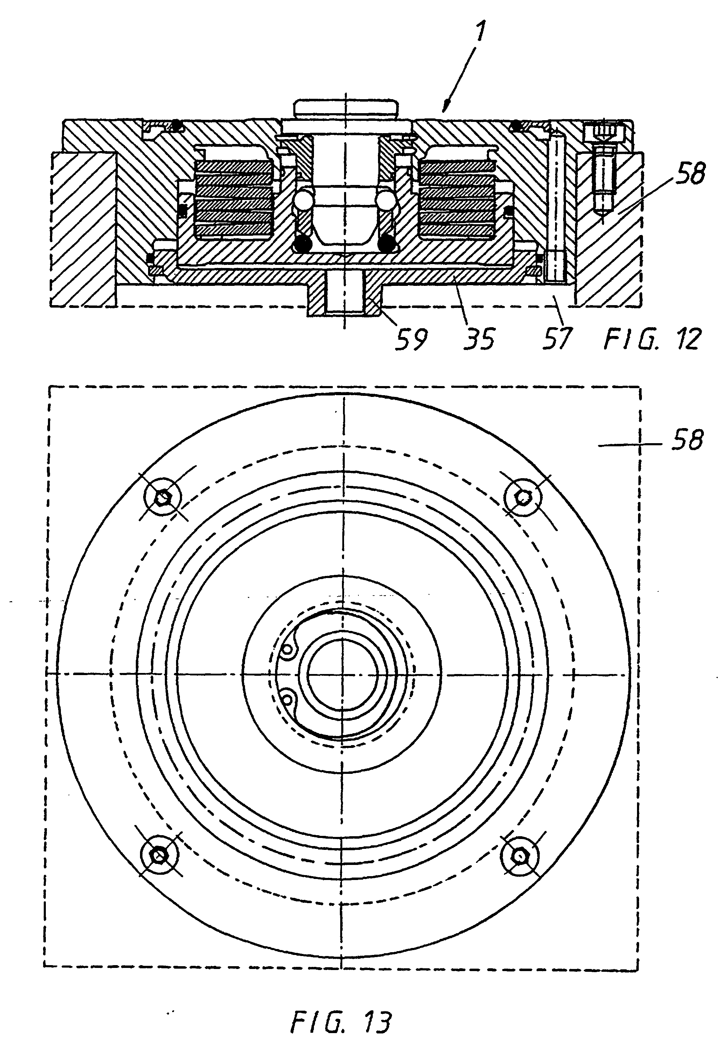

Zur Zuführung von Luft zu den Blasbohrungen 7 ist ein Lufteinlaß 30 vorgesehen, welcher über eine Kreuzbohrung 31 und einen Kanal 32 in die Blasbohrung 7 mündet. Diese Kreuzbohrung 31 dient zur Aufteilung der zugeführten Druckluft, um einerseits die Funktion des Ausblasens zu gewährleisten, und andererseits einen gezielten Druckabfall der Druckluft an der wirksamen Angriffsfläche an der Unterseite des Einzugsnippels (17) zu erreichen. Diese Maßnahme dient zur Gewährleistung der Betriebssicherheit des Schnellspannzylinders. Diese Merkmale sind in den Figuren 4 bis 11 besonders gut erkennbar dargestellt. Die Draufsicht auf die Anordnung des Blasrings 6 mit den Blasbohrungen 7 und des O-Rings 5 im Schnellspannzylinder ist in den Figuren 3 und 13 gut erkennbar.

Im rechten Teil der Darstellung der Fig. 1 ist noch gezeigt, daß die Kreuzbohrung 31 auch noch auf eine andere, einfache Weise hergestellt werden kann, denn es kann bei der Bearbeitung des Gehäuses 2 ein von oben nach unten durchlaufender Kanal 8 angefertigt werden, welcher in seinem oberen Teil die Luft zu den Blasbohrungen 7 führt, während in seinem unteren Teil der Ölfluß geführt wird. Zur Trennung der beiden Medien ist hierbei eine Madenschraube 9 abdichtend in den Kanal 8 eingeschraubt, so daß der Teil oberhalb der Madenschraube 9 mit Luft versorgt wird, während der untere Teil des Kanals 8 jenseits der Madenschraube 9 von Öl beaufschlagt wird. Hierzu ist ein Öleinlaß 10 vorhanden, über den das Hydrauliköl über eine zugeordnete Schrägbohrung 11 in den Ölraum 12 eingeführt wird. Der Ölraum 12 wird hierbei nach oben von dem Kolben 13 begrenzt, welcher verschiebbar und abgedichtet im Ölraum 12 des Zylinders läuft.

Der Kolben 13 bildet hierbei am Umfang verteilt angeordnete Ausnehmungen 14 aus, in welche Fedem 16 eingesetzt sind. Zur besseren Einstellung der Federkraft ruhen diese kolbenseitig auf zugeordneten Distanzringen 15, die ggf.- je nach Federstärke - in ihrer Dicke variiert werden können.

Wichtig ist nun, daß die zylindergehäuseseitige Begrenzung durch federnde Anschläge 25, 24 erzeugt wird.

Im linken Halbschnitt ist als fedemder Anschlag 25 ein werkstoffeinstückig mit dem Gehäuse 2 ausgebildeter Anschlag dargestellt, der in axialer Richtung des Gehäuses 2 federnd ausgebildet ist. Um dies zu ermöglichen, ist oberhalb des Anschlages 25 ein radialer Einstich 26 vorgesehen, der dem Anschlag 25 das geforderte Federvermögen verleiht.

In einer anderen, alternativen Ausführungsform ist auf dem rechten Halbschnitt dargestellt, daß statt dieses Anschlages 25 auch ein Seegerring 24 verwendet werden kann, der die gleiche Aufgabe übernimmt.

Radial einwärts sind im Federraum 38, welcher die jeweilige Feder 16 aufnimmt, gehäusefeste Anschläge am Gehäuse 2 ausgebildet.

Diese gehäusefesten Anschläge nehmen jedoch keinerlei Federkraft auf, weil die Federn (als Tellerfedem ausgebildet) konisch ausgebildet sind und lediglich lastübertragend an den federnden Anschlägen 24 bzw. 25 anliegen.

Im übrigen sind die Federräume 38 luftgefüllt, d.h. in diese Räume gelangt kein Hydrauliköl hinein.

Der Einzugsnippel 17 sitzt im entspannten Zustand (rechter Halbschnitt) auf dem Boden des Kolbens 13 auf. Der entspannte Zustand ist hierbei dadurch gekennzeichnet, daß die in einem Kugelkäfig 18 gehaltenen Kugeln 20 in einem zugeordneten Freistich 39 im Gehäuse eingreifen, wobei die Kugeln 20 demgemäß außer Eingriff mit der Ringnut 40 des Einzugsnippels 17 sind.

Im gespannten Zustand sind hingegen die Kugeln 20 außer Eingriff mit dem Freistich 39' und greifen in die Ringnut 40 ein, wodurch aufgrund der Federkraft der Feder 16' der Einzugsnippel 17 nach oben verschoben wird.

Der Freistich 39 im Kolben dient also sozusagen als Parkplatz für die Kugeln 20.

In der Eingriffsstellung der Kugeln 20 mit der Ringnut 40 (linker Halbschnitt) liegen hingegen die Kugeln 20 an einer zugeordneten, hochgenauen Rundung am Kolben an, welche Rundung sich an den Freistich 39 in axialer Richtung nach oben hin anschließt.

Der Steuerring 19, der sich am Boden des Kolbens 13 abstützt, hat die Aufgabe, den Kugelkäfig 18 immer in seiner angehobenen Lage zu halten. Er ist federnd ausgebildet und elastisch verformbar.

Im übrigen ist abdichtend am Einzugsnippel 17 noch ein Dichtring 21 angeordnet, der mit zugeordneten Segerringen 22, 23 sich am Gehäuse 2 abstützt und dort gehalten ist.

Der Boden 35 wird mittels eines radial auswärts angeordneten Dichtringes 28 abdichtend im Ölraum 12 gehalten. Er bildet femer einen axial nach oben verlängerten Ansatz 36 aus, der bevorzugt ringsum umläuft.

Er wird ferner gegen axiale Verschiebung durch einen Seegerring 29 an dem inneren Umfang des Gehäuses 2 gesichert.

Zur Montage des Schnellspannzylinders 1 wird dieser zunächst umgedreht, so daß das Gehäuse 2 nach oben hin geöffnet ist und der Ölraum 12, sowie die Federräume 38 noch miteinander in Verbindung sind. Das Gehäuse 2 ist hierbei von allen Einbauten befreit.

Wird nun bei einer bevorzugten Ausführungsform anstatt der an der Gehäuseinnenwand vorstehenden federnden Anschläge 25 ein lösbarer Seegerring 24 verwendet, dann wird zunächst der Seegerring 24 eingesetzt. Danach werden alle Federn im entspannten Zustand (Feder 16') in die zugeordneten Federräume 38 eingesetzt. Ggf. wird dann ein Distanzring 15 aufgelegt.

Anschließend wird der gesamte Kolben 13 in das Gehäuse 2 eingeschoben, und danach der Boden 35 in den Ölraum 12 eingeschoben.

Danach wird in Pfeilrichtung 41 mit einer nicht näher dargestellten Presse ein Pressdruck auf den Boden 35 ausgeübt, so daß dieser axial einwärts in Pfeilrichtung 41 verschoben wird und der Ansatz 36 auf den zugeordneten gehäusefesten Anschlag - im Gehäuse 2 aufläuft. Auf diese Weise werden nun die Federn gespannt und es wird die Einbausituation entsprechend dem rechten Halbschnitt in der Abbildung erreicht.

Unter Beibehaltung des Pressdruckes in Pfeilrichtung 41 wird nun der Seegerring 29 eingelegt und befestigt, so daß sich in diesem Zustand ein Abstand zwischen dem Boden 35 und dem eingelegten Seegerring 29 ergibt. Wenn nun der Pressdruck reduziert wird, bewegt sich der Boden 35 in Gegenrichtung zur Pfeilrichtung 41 in axialer Richtung nach außen, und gleichzeitig kommt damit der Seegerring 29 in Eingriff mit der Ringnut 42 am Aussenumfang des Bodens 35. Dieser wird nun lagengesichert und abgedichtet (Dichtring 28) in dem Öleinlass 10 festgehalten und ist gegen weitere Verschiebung gesichert. Er kann demzufolge nicht mehr in axialer Richtung (Gegenrichtung zur Pfeilrichtung 41) herausspringen. Damit ist die Montage im wesentlichen beendet. Hieraus ergibt sich eine besonders einfache und kostengünstige Montage. Der bisher benötigte Boden, der auf der Seite an der die Palette befestigt wird angeordnet war und den Schnellspannzylinder verschloß, entfällt nun vollständig. Ebenso entfallen die zuvor benötigten Befestigungsschrauben die zum Verschließen des Bodens notwendig waren, und damit auch die damit verbundenen Arbeitsschritte. Es ergibt sich dadurch also eine wesentlich einfachere und kostengünstigere Montage sowie ein einfacherer Aufbau des Schnellspannzylinders.

Im übrigen sind - wegen des Wegfalls des Deckels und der zugeordneten Bohrungen - auch keine Vertiefungen auf der Befestigungsebene für die Palette mehr gegeben, die in nachteiliger Weise Schmutz und Späne aufnehmen und auch einen Wasserstau ergeben. Die Oberfläche des Schnellspannzylinders 1 also der Deckenbereich 37 ist demgemäß von sämtlichen, störenden Einbauten frei und kann im Betrieb sauber und rein gehalten werden. Sie kann dementsprechend durch den Handballen oder durch ein Reinigungstuch vollkommen frei von Spänen oder Verschmutzungen gehalten werden, was bei dem vorherigen Deckel-Schnellspannzylinder nicht möglich war.

Im folgenden wird nochmals die Bedeutung der federnden Anschläge 24,25 herausgehoben, für deren Art und Anordnung gesonderter und unabhängiger Schutz von der vorher beschriebenen Erfindung beansprucht wird.

Die Anordnung von gehäuseseitigen, federnden Anschlägen 24,25 als Auflager und Abstützung für die Federn 16,16' hat nämlich den wesentlichen Vorteil, daß die Federkraft nun nicht unmittelbar auf den Deckenbereich 37 des Gehäuses 2 übertragen wird, sondern unter Zwischenschaltung eines federnden Körpers (Anschläge 24,25)an die Außenwand des Schnellspannzylinders 1, so daß eine Gefahr . _ der Verbiegung des Gehäuses 2 im Deckenbereich 37 aufgrund dieser Federkraft vermieden wird. Auf diese Weise wird das Gehäuse von derartigen Spannungen des Federpaketes freigehalten und diese Spannungen werden unmittelbar auf vom Gehäuse entkoppelte Anschläge übertragen. Es wird sogar eine gewisse Verbiegung der Anschläge 24,25 gestattet, um zu vermeiden, daß derartige hohe Kräfte auf das Gehäuse 2 einwirken.

Demgemäß ist auch dem Seegerring 24 ein zugeordneter Einstich 26 angebracht, um zu gewährleisten, daß sich die jeweiligen Anschläge 24,25 in axialer Richtung leicht nach oben verformen können.

Bei der vorherigen, erwähnten Konzeption des Schnellspannzylinders mit einem Deckel war der Nachteil, daß die Kraft der Federpakete unmittelbar auf die Deckelinnenseite übertragen wurde, wodurch die Gefahr bestand, daß sich der Deckel aufwölbte und bombiert wurde. Die Maßgenauigkeit wurde dadurch beeinträchtigt.

Es wird nochmals darauf hingewiesen, daß wahlweise ein gehäusefester, federnder Anschlag 25 oder ein Seegerring 24 verwendet werden kann.

Von besonderem Vorteil an dem deckellosen Schnellspannzylinder ist, daß nun die Nippelbohrung 43, in welcher der Einzugsnippel 17 axial verschiebbar gehalten ist, nun hochgenau bearbeitet werden kann, ohne daß ein Deckel vorgesehen werden muß. Unter einer einzigen Aufspannung wird nämlich die Nippelbohrung 43 mit einem Werkzeug von unten in Pfeilrichtung 41 bearbeitet und gleichzeitig kann im gleichen Bearbeitungsschritt und mit der gleichen Einspannung auch die Zylinderbohrung 44 des Gehäuses 2 bearbeitet werden.

Auf diese Weise wird gewährleistet, daß beide Bohrungen 43,44 hochgenau und fluchtend zueinander angeordnet sind, so daß sie genau konzentrisch zueinander ausgerichtet sind. Diese beiden Bohrungen bestimmen überhaupt die Genauigkeit des Schnellspannzylinders und die Genauigkeit der sogenannten nullpunkt-orientierten Aufspannung von Werkstücken.'

Nach dem Stand der Technik, bei der ein Schnellspannzylinder mit einem Deckel vorgesehen war, war es erforderlich, die Deckelinnenbohrung hochgenau zu bearbeiten. Davon betroffen waren die Stellen wo der Nippel hindurchgreift, den Zentrierrand des Deckels, die stelle wo der Deckel auf dem Gehäuse aufliegt und die Auflagefläche des Deckels in Richtung auf die Stirnfläche des Zylindergehäuses und zusätzlich auch noch der Aussendurchmesser des Deckels. Es mußten also insgesamt 4 unterschiedliche Flächen hochgenau bearbeitet werden, was nicht in einem einzigen Aufspannzustand möglich war. Außerdem mußten ja die Maße von dem Deckel und dem Zylindergehäuse aneinander angepaßt und hochgenau zueinander ausgerichtet werden. Dies entfällt nach der vorliegenden Erfindung und es ist lediglich in einem einzigen Aufspannzustand die Nippelbohrung 43 konzentrisch zu der Zylinderbohrung 44 zu bearbeiten, was ohne weiteres und mit einfachen Mitteln möglich ist.

Bei dem vorher beschriebenen Deckel, der mit dem Schnellspannzylinder zusammenwirkte, waren auch unterschiedliche Materialpaarungen gegeben, was zusätzliche Herstellungsungenauigkeiten erbrachte. Im übrigen entstanden höhere Herstellungskosten durch die Notwendigkeit, daß der Deckel unterschiedlich von dem Gehäuse gehärtet werden mußte.

Bei der vorliegenden Erfindung wird lediglich nur ein einziges, gehärtetes Gehäuse 2 verwendet, wobei der Boden 35 weich bleiben kann und lediglich an seinem Aussenumfang so bearbeitet wird, daß er abdichtend in die Zylinderbohrung 44 eingesetzt werden kann. Der Boden 35 muß also nicht an seinem Außenumfang rund geschliffen werden, weil die erforderliche Dichtwirkung mit dem Dichtring 28 bewerkstelligt wird.

Er hat also lediglich nur noch Dichtfunktion, während der beim Stand der Technik vorhandene, gegenüberliegende Deckel hochgenau bearbeitet werden mußte und lastübertragend sein mußte.

Die Figuren 2 und 3 zeigen eine andere Ausführungsform in Schnitt und in Draufsicht, wobei in Figur 2 erkennbar ist, daß aufgrund der Auswechselbarkeit, des Bodens 35 ein dünnerer Boden 35 eingesetzt ist, um eine niedrigere Einbauhöhe zu erreichen.

Die Figuren 4 bis 11 zeigen unterschiedliche Varianten von Bodenausführungen 35. Hierbei ist wesentlich, daß der Boden 35 sowohl einteilig als auch zweiteilig ausgebildet sein kann; er ist aber immer auswechselbar ausgebildet.

In Figur 4 ist dargestellt, daß ein zweiteiliger Boden 35 vorhanden ist, wobei ein Einsatz 45 vorhanden ist, der über einen Seegerring 46 befestigt ist; die Einblasluft gelangt über den Anschlußstutzen 30 in das Gehäuse, tritt in einen Querkanal 47 in den Boden ein und gelangt über einen Ringkanal 48 der als Einstich ausgebildet ist in radial schräg einwärts gerichtete Auslaßbohrungen 49, die etwa in Richtung auf die Längsmittenachse gerichtet sind. Von den Ausblasbohrungen 49, die schräg nach unten und einwärts gerichtet sind, zweigen im übrigen noch schräg aufwärts gerichtete Ausblasbohrungen 50 ab.

Im übrigen wird noch darauf hingewiesen, daß die Querkanäle 47 gleichmäßig am Umfang verteilt im Boden angeordnet sind und strahlenförmig sich in dem Boden erstrecken und hierbei luftschlüssig mit einem Ringkanal 51 verbunden sind.

Im übrigen ist bei dieser Ausfertigungsform wichtig, daß aufgrund der zweiteiligen Ausbildung des Bodens 35 mit einem darin dichtend eingesetzten Einsatz 45 beliebig gestaltete Ausblasöffnungen gebildet werden können, denn der Einsatz 45 ist ebenfalls auswechselbar im auswechselbaren Boden 35 gehalten.

Der Einsatz 45 ist im übrigen in seinem Mittenbereich mit einer Öffnung 52 versehen, um eventuell Kühlmittel auslaufen zu lassen, welches von oben her in das Gehäuse des Spannzylinders eindringen könnte.

Im übrigen wird darauf hingewiesen, daß die Ausblaskanäle 49 nur in die schräg nach oben gerichteten Ausblasbohrungen münden, die dem zufolge einen nach innen gerichteten und schräg aufwärts gerichteten Luftstrom erzeugen. Wird nämlich der Einzugsnippel 17 aus seiner Aufnahme im Zylindergehäuse nach oben entfernt, dann wird die Nippelbohrung 43 frei und wird durch den in den Ausblasbohrungen 50 erzeugten Luftstrahl von unten her nach oben gerichtet, gereinigt.

Figur 5 zeigt eine weitere Ausführungsform eines zweiteiligen Boden 35, wobei in dem Boden 35 wiederum ein Einsatz 53 eingepaßt ist, der dort dichtend eingesetzt ist. Dieser Einsatz 53 hat die vorhin anhand der Figur 4 erwähnte Ablauföffnung 52 nicht; ansonsten gelten die gleichen Erläuterungen, d. h. es sind Luftbohrungen und Ausblasbohrungen vorhanden, die bei Entfernung des Einzugsnippels 17 aus seiner Nippelbohrung 43 ein nach oben gerichteten Luftstrahl zwecks Säuberung der Nippelbohrung erzeugen.

Die Figur 6 zeigt als weiteres Ausführungsbeispiel einen zweiteiligen Boden 35 mit einem Einsatz 54, welcher Einsatz die gleiche Funktion hat, wie der vorher erwähnte Einsatz 53, nur das zusätzlich an diesem Einsatz noch ein Zentrieransatz 55 angeordnet ist, der geeignet ist, in eine entsprechende Zentrierbohrung in eine Lochrasterpalette einzugreifen, um den gesamten Spannzylinder lagenrichtig auf der Aufspannpalette zu positionieren.

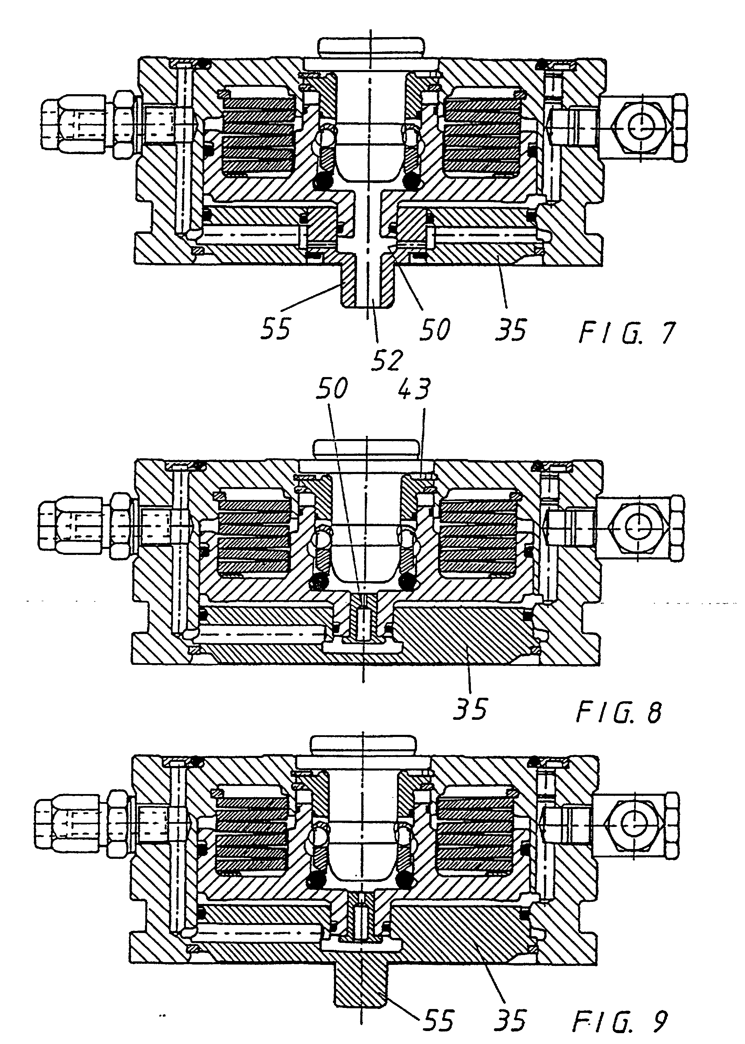

Die Figur 7 zeigt eine Kombination der Ausführung nach Figur 4 und Figur 6, weil erkennbar ist, daß einerseits eine Öffnung 52 vorhanden ist, um als Ablauf zu dienen; ferner sind die Aufblasbohrungen 50 vorhanden, und es ist der Zentriereinsatz 55 vorgesehen, der in Figur 6 bereits schon erwähnt wurde.

Die Figur 8 zeigt einen einteiligen Boden 35, der lediglich eine zentrale mittige Ausblasbohrung 50 in Richtung auf die Nippelbohrung 43 ausbildet.

In Figur 9 ist wiederum ein einteiliger Boden dargestellt, der aber zusätzlich mit dem vorher erwähnten Zentrieransatz 55 versehen ist.

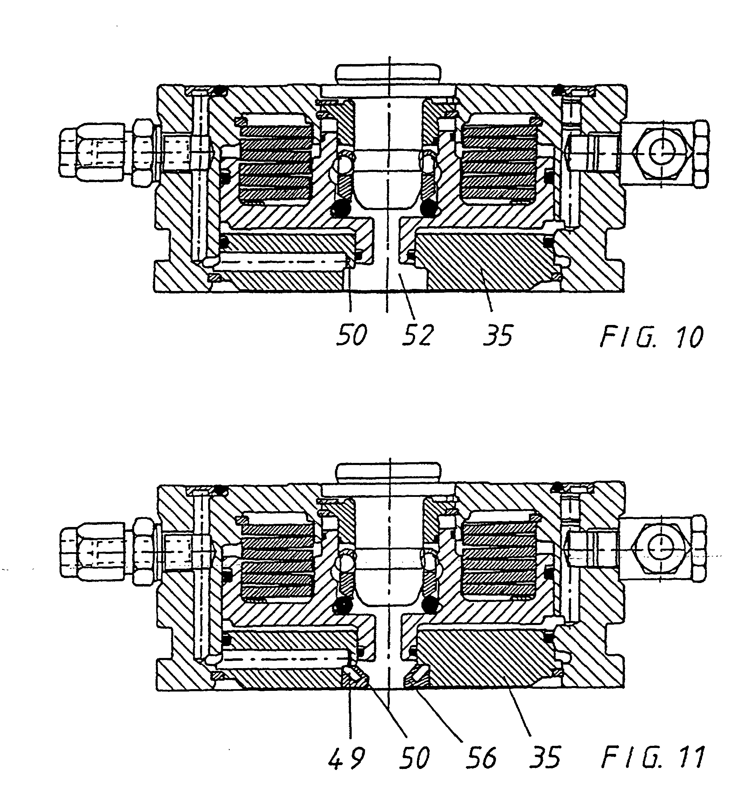

Die Figur 10 zeigt einen einteiligen Boden 35 mit einer Öffnung 52, die als Ablauf geeignet ist und weist schräg nach unten gerichtete Ausblasbohrungen 50 auf.

Die Figur 11 zeigt einen zweiteiligen Boden 35 mit einem Einsatz 56, der in die zentrale Mittenbohrung eingepreßt ist und der Ausblaskanäle 49 definiert, die in schräg nach oben gerichteter Ausblasbohrungen 50 münden.

Mit dieser Ausführungsform wird erreicht, daß man die Art der Ausblasung durch einen auswechselbaren Ausblaseinsatz entsprechend variieren kann.

Es handelt sich bei diesen Ausführungsformen also ebenfalls um ein Baukastensystem, aus dem sich ergibt, daß der Boden 35 einteilig oder mehrteilig ausgebildet sein kann und daß auswechselbare Einsätze vorhanden sind, die verschiedenen Anwendungszwecken dienen.

Hieraus ergibt sich, daß aufgrund des modularen Aufbaus in Form eines Baukastensystems auch Kundenbedürfnissen entsprochen werden kann, denn entsprechend den Anforderungen am Einsatzort, können unterschiedliche Einsätze eingesetzt werden.

In Figuren 12 und 13 zeigen als weitere Ausführungsform, daß es nicht lösungsnotwendig ist, einen Schnellspannzylinder 1 auf einen Fräsmaschinentisch zu befestigen, wie dies anhand der Figur 1 erläutert wurde, sondern bei der Figur 12 und 13 handelt es sich um eine Einbaulösung, bei der gesamte Schnellspann-zylinder in einer Aufnahmeöffnung 57 eines Maschinentisches 58 oder einer Schnellverschlußplatte eingelassen ist.

in einem derartigen Maschinentisch 58 kann selbstverständlich nicht nur ein einziger Schnellspannzylinder eingesetzt werden, sondern es können mehrere modular in entsprechende Aufnahmeöffnungen 57 eingesetzt und dort befestigt werden.

Der Boden 35 weist hierbei einen Druckölanschluß 59 auf, der direkt in den Boden einmündet.

### Zeichnungsiegende

- 1.: Schnellspannzylinder
- 2.: Gehäuse
- 3.: Ansatz
- 4.: Nut
- 5.: O-Ring
- 6.: Blasring
- 7.: Blasbohrung
- 8.: Kanal
- 9.: Madenschraube
- 10.: Öleinlaß
- 11.: Schrägbohrung
- 12.: Ölraum
- 13.: Kolbenboden
- 14.: Ausnehmung
- 15.: Distanzring
- 16.: Feder
- 17.: Einzugsnippel
- 18.: Kugelkäfig
- 19.: Steuerring
- 20.: Kugel
- 21.: Dichtring
- 22.: Seegerring
- 23.: Seegerring
- 24.: Seegerring
- 25.: fedemder Anschlag
- 26.: Einstich
- 27.: O-Ring
- 28.: Dichtring
- 29.: Seegerring
- 30.: Lufteinlaß
- 31.: Kreuzbohrung
- 32.: Kanal
- 33.: Anschlagpratze
- 34.: Schraube
- 35.: Boden
- 36.: Ansatz
- 37.: Deckenbereich
- 38.: Federraum
- 39.: Freistich
- 40.: Ringnut
- 41.: Pfeilrichtung
- 42.: Ringnut
- 43.: Nippelbohrung
- 44.: Zylinderbohrung
- 45.: Einsatz
- 46.: Seegerring
- 47.: Querkanal
- 48.: Ringkanal
- 49.: Ausblaskanal
- 50.: Ausblasbohrung
- 51.: Ringkanal
- 52.: Öffnung
- 53.: Einsatz
- 54.: Einsatz
- 55.: Zentrieransatz
- 56.: Einsatz
- 57.: Aufnahmeöffnung
- 58.: Maschinentisch
- 59.: Druckölanschluß

## Patentansprüche

1. Verfahren zur Herstellung und Montage eines deckellosen Schnellspannzylinders (1) mit Einzugsnippel (17) zum Festspannen einer Trägerplatte, die an einer Bearbeitungsmaschine zur Fixierung von Werkstücken dient, wobei die Spannkraft durch Spannfedern (16) erzeugt wird, und zur Entriegelung ein Hydraulikkolben (13) betätigbar ist, der die Spannkraft der Spannfedern überwindet, **dadurch gekennzeichnet, daß** die Montage der einzelnen Funktionseinheiten des Schnellspannzylinders (1) von der Kolbenseite her erfolgt, also von der Seite, die im Betriebszustand die Bodenseite des Schnellspannzylinders (1) darstellt.

2. Verfahren nach Anspruch 1 **dadurch gekennzeichnet, daß** in das auf seinem Deckenbereich (37) liegende Zylindergehäuse (2), im Montagezustand von oben her, zunächst die entspannten Federn (16) in die Federräume (38), anschließend der Kolben mit dem nach außen zur Montageöffnung hin zeigenden Kolbenboden (13) in den Zylinderraum, und abschließend der Boden (35) in das Gehäuse (2) eingesetzt werden.

3. Verfahren nach den Ansprüchen 1 und 2 **dadurch gekennzeichnet, daß** mit einer Presse der Boden (35) in das Gehäuse (2) hineingepresst wird, bis er an einem gehäusefesten Anschlag ansteht, und anschließend der Seegerring (29) in die dafür vorgesehene Nut im Gehäuse (2) zur Fixierung der Vorrichtung in eingesetzt wird.

4. Verfahren nach den Ansprüchen 1-3 **dadurch gekennzeichnet, daß** nach Wegnahme des Pressdrucks der Boden (35) durch die Spannkraft der Federn (16) in axialer Richtung nach außen gegen den Seegerring (29) gedrückt wird, und den Schnellspannzylinder (1) verschließt.

5. Schnellspannzylinder (1) mit Einzugsnippel (17) zum Festspannen einer Trägerplatte, die an einer Bearbeitungsmaschine zur Fixierung von Werkstücken dient, wobei die Spannkraft durch Spannfedern (16) erzeugt wird, und zur Entriegelung ein Hydraufikkofben (13) betätigbar ist, der die Spannkraft der Spannfedern überwindet, **dadurch gekennzeichnet, daß** die in seinem Inneren angeordneten Funktionsbauteile durch den an der Unterseite des Schnellspannzylinders lösbar befestigten, auswechselbaren Boden (35) in ihrer Einbaulage fixiert sind, und der Schnellspannzylinder damit verschlossen ist.

6. Schnellspannzylinder nach Anspruch 5 **dadurch gekennzeichnet, daß** der Boden (35) den Ölraum (12) mit dem Dichtring (28) abdichtet und durch einen Seegerring (29) im Schnellspannzylinder (1) fixiert ist.

7. Schnellspannzylinder nach einem der Ansprüche 5 und 6 **dadurch gekennzeichnet, daß** der Boden zweiteilig ausgebildet ist, und sich aus dem Boden (35) mit einen darin lösbar befestigten, austauschbaren Einsatz (45), der eine zentrale Mittenbohrung (52) aufweist, zusammensetzt.

8. Schnellspannzylinder nach Anspruch 7 **dadurch gekennzeichnet, daß** der Einsatz (45) zur gezielten Verteilung von Ausblasluft dient, wobei dieser mit einem als Verteiler dienenden Ringkanal (51), Querkanälen (47), einem weiteren, zur Mittenachse hin angeordneten, Ringkanal (48) und daran anschließenden radial einwärts nach unten angeordneten Auslaßbohrungen (49), mit denen weitere radial einwärtsgerichtete nach oben hin führende Ausblasbohrungen (50) verbunden sind, zusammenwirkt.

9. Schnellspannzylinder nach einem der Ansprüche 5 und 6 **dadurch gekennzeichnet, daß** der zweiteilige Boden aus dem Boden (35) und einem Einsatz (53) zusammengesetzt ist, wobei der Einsatz (53) einen Zentrieransatz (55) zur Positionierung in einem Koordinatensystem der Bearbeitungsmaschine aufweist.

10. Schnellspannzylinder nach einem der Ansprüche 5 bis 9 **dadurch gekennzeichnet, daß** im Boden (35) ein Druckölanschluß (59) zur Versorgung des Ölraumes (12) mit Öl angeordnet ist.

11. Schnellspannzylinder nach einem der Ansprüche 5 bis 9 **dadurch gekennzeichnet, daß** im Gehäuse (2) ein Ölanschluß (10) zur Versorgung des Ölraumes (12) mit Öl und ein Lufteinlaß (30) zur Versorgung des Schnellspannzylinders (1) mit Druckluft angeordnet ist.

12. Schnellspannzylinder nach einem der Ansprüche 5 bis 11 **dadurch gekennzeichnet, daß** mindestens ein federnd ausgebildeter Anschlag (25) für je eine Feder(16) angeordnet ist, der werkstoffeinstückig mit der Zylinderwand verbunden ist.

13. Schnellspannzylinder nach einem der Ansprüche 5 bis 12 **dadurch gekennzeichnet, daß** mindestens ein federnd ausgebildeter Anschlag für je eine Feder(16) in der Form eines Seegerrings (24) angeordnet ist, der in einen Einstich (26) in das Gehäuse (2) eingreift.

14. Schnellspannzylinder nach einem der Ansprüche 5 bis 13 **dadurch gekennzeichnet, daß** die Federräume (38) die zur Aufnahme der Federn (16) dienen luftgefüllt und gegen eindringen von Hydrauliköl abgedichtet sind.

15. Schnellspannzylinder nach einem der Ansprüche 5 bis 14 **dadurch gekennzeichnet, daß** axial in der Mitte des Deckenbereichs (37) eine paßgenaue Bohrung angefertigt ist, durch die der Einzugsnippel (17) hindurchragt.

16. Schnellspannzylinder nach einem der Ansprüche 5 bis 15 **dadurch gekennzeichnet, daß** im Deckenbereich (37) ein Blasring (6) mit über seinen Umfang verteilten Blasbohrungen (7) angeordnet ist, der über eine Kreuzbohrung (31) mit dem Lufteinlaß (30) verbunden ist.

17. Schnellspannzylinder nach einem der Ansprüche 5 bis 16 **dadurch gekennzeichnet, daß** eine Kreuzbohrung (31) zur Aufteilung des Druckluftstromes aus dem Lufteinlaß (30) in wenigstens zwei Luftströme dient, wobei wenigsten ein Luftstrom nach unten zum Ringkanal (51), und mindestens ein Luftstrom nach oben zum Blasring (6) geführt wird.

18. Schnellspannzylinder nach einem der Ansprüche 5 bis 17 **dadurch gekennzeichnet, daß** durch gezielte Wahl der Bohrungsdurchmesser für die Zufuhr- und Ausblasleitungen, und der Aufteilung des Durckluftstromes in Teilströme, der Luftdruck der Druckluft an der Unterseite des Einzugsnippels gesteuert werden kann.

19. Schnellspannzylinder nach einem der Ansprüche 5 bis 18 **dadurch gekennzeichnet, daß** an der Außenseite des Deckenbereichs (37) in einer Nut (4) ein O-Ring (5) angeordnet ist, der in Zusammenwirkung mit der Trägeplatte den Spannbereich zwischen Schnellspannzylinder und Trägerplatte abdichtet.

20. Schnellspannzylinder nach einem der Ansprüche 5 bis 19 **dadurch gekennzeichnet, daß** mindestens ein Schnellspannzylinder (1) in mindestens einer Aufnahmeöffnung (57) eines Maschinentisches (58) befestigbar ist, und daß der Aufbau des Schnellspannzylinders entsprechend den Anforderungen des jeweiligen Bearbeitungsschrittes ausgestaltet ist.

## Claims

1. Method of manufacturing and assembling a quick-action clamping cylinder (1) without cover, comprising a draw-in nipple (17) for clamping a supporting disk serving to fix work pieces on a processing machine, wherein the clamping force is generated by tensioning springs (16), and wherein a hydraulic piston (13) is provided for unclamping, which overcomes the clamping force of the tensioning springs, **characterised in that** the assembly of the individual functional units of said quick-action clamping cylinder (1) is performed from the piston side, i.e. from the side representing the bottom side of said quick-action clamping cylinder (1) in the operating state.

2. Method according to Claim 1, **characterised in that** in the cylinder housing (2) supported on its cover zone (37), in the assembly state, from the top, first the released springs (16) are inserted into the spring chambers (38), subsequently the piston is inserted into the cylinder chamber with the piston bottom turned outwardly towards the assembly opening, and finally the bottom (35) is inserted into the housing (2).

3. Method according to the Claims 1 and 2, **characterised in that** said bottom (35) is pressed into said housing (2) by means of a press until it bears against a stop integral with the housing, and that subsequently the Seeger retaining ring (29) is inserted into the groove provided to this end in said housing (2) for fixing the device.

4. Method according to the Claims 1 to 3, **characterised in that** after removal of the pressing pressure the bottom (35) is pressed by the tensioning force of said springs (16) in an axial outward direction against said Seeger retaining ring (29) and closes said quick-action clamping cylinder (1).

5. Quick-action clamping cylinder (1) with a draw-in nipple (17) for clamping a supporting disk serving to fix work pieces on a processing machine, wherein the clamping force is generated by tensioning springs (16), and wherein a hydraulic piston (13) is provided for being operated for unclamping, which overcomes the clamping force of the tensioning springs, **characterised in that** the functional components disposed in its interior are fixed in their mounted position by the exchangeable bottom (35) detachably fastened on the underside of the quick-action clamping cylinder, and that the quick-action clamping cylinder is closed thereby.

6. Quick-action clamping cylinder according to Claim 5, **characterised in that** the bottom (35) seals the oil chamber (12) by means of the sealing ring (28) and is fixed in the quick-action clamping cylinder (1) by means of a Seeger retaining ring.

7. Quick-action clamping cylinder according to any of the Claims 5 and 6, **characterised in that** the bottom is configured in a two-piece form and is composed of the bottom (35) with an exchangeable insert (45) detachably fastened therein, which presents a central middle bore (52).

8. Quick-action clamping cylinder according to Claim 7, **characterised in that** said insert (45) serves for selectively distributing blow-out air, with this insert cooperating with an annular passage (51) serving as distributor, with cross passages (47), with a further annular passage (48) disposed towards the central axis, and with joining discharge bores (49) to which further blow-out bores (50) radially extending in an inward and upward direction are connected.

9. Quick-action clamping cylinder according to any of the Claims 5 and 6, **characterised in that** the two-piece bottom is composed of the bottom (35) and an insert (53), with said insert (53) including a centring projection (55) for positioning in a coordinate system of the processing machine.

10. Quick-action clamping cylinder according to any of the Claims 5 to 9, **characterised in that** a pressurised-oil port (59) is disposed in said bottom (35) for supplying said oil chamber (12) with oil.

11. Quick-action clamping cylinder according to any of the Claims 5 to 9, **characterised in that** an oil port (10) is disposed in said housing (2) for supplying said oil chamber with oil, and that an air inlet (30) is disposed for supplying the quick-action clamping cylinder (1) with compressed air.

12. Quick-action clamping cylinder according to any of the Claims 5 to 11, **characterised in that** at least one resiliently designed stop (25) is disposed for one spring (16) each, which is connected to the cylinder in a manner integral with the material.

13. Quick-action clamping cylinder according to any of the Claims 5 to 12, **characterised in that** at least one resiliently designed stop is disposed for one spring (16) each in the form of a Seeger retaining ring (24), which engages in a recess (26) in said housing (2).

14. Quick-action clamping cylinder according to any of the Claims 5 to 13, **characterised in that** said spring chambers (38) serving to accommodate said springs (16) are filled with air and are sealed to prevent the penetration of hydraulic oil.

15. Quick-action clamping cylinder according to any of the Claims 5 to 14, **characterised in that a** precisely fitting bore is axially formed in the middle of said cover zone (37), through which said draw-in nipple (17) projects.

16. Quick-action clamping cylinder according to any of the Claims 5 to 14, **characterised in that** a blow ring (6) with blow bores (7) distributed along its periphery is disposed in said cover zone (37), which is connected via a cross bore (31) to the air intake (30).

17. Quick-action clamping cylinder according to any of the Claims 5 to 16, **characterised in that** a cross bore (31) serves to distribute the compressed-air flow from said air intake (30) into at least two air flows, with at least one air flow being guided in a downward direction towards said annular passage (51) and at least one air flow in an upward direction towards said blow ring (6).

18. Quick-action clamping cylinder according to any of the Claims 5 to 17, **characterised in that** the air pressure of said compressed air can be controlled on the underside of said draw-in nipple by means of a selective choice of the bore diameter for the supply and blowout lines, and the distribution of said compressed-air flow into partial flows.

19. Quick-action clamping cylinder according to any of the Claims 5 to 18, **characterised in that** an O-ring (5) is disposed in a groove (4) on the outside of said cover zone (37), which O-ring cooperates with said supporting disk to seal the clamping zone between the quick-action clamping cylinder and said supporting disk.

20. Quick-action clamping cylinder according to any of the Claims 5 to 19, **characterised in that** at least one quick-action clamping cylinder (1) is adapted for being fastened in at least one receiving opening (57) of a machine table (58), and that the structure of the quick-action clamping cylinder is designed in correspondence with the demands on the respective processing step.

## Revendications

1. Procédé à produire et assembler un cylindre de serrage à action rapide (1) sans couvercle, comprenant un nipple d'entrée (17) à serrer un disque d'appui qui sert à fixer des pièces à usiner à une machine d'usinage, dans lequel la force de serrage est engendrée par des ressorts tendeurs (16), et dans lequel un piston hydraulique (13) est disposé pour le desserrage, qui surmonte la force de serrage des ressorts tendeurs, **caractérisé en ce que** l'assemblage des unités fonctionnelles individuelles dudit cylindre de serrage à action rapide (1) est réalisé à partir du côté du piston, c'est-à-dire à partir du côté représentant le côté inférieur dudit cylindre de serrage à action rapide (1 ) en l'état de service.

2. Procédé selon la revendication 1, **caractérisé en ce que** dans le carter du cylindre (2) appuyé sur sa zone de couvercle (37), en état d'assemblage, à partir du côté haut, d'abord les ressorts relâchés (16) sont insérés dans les chambres de ressorts (38), ensuite le piston est inséré dans la chambre du cylindre, au fond du piston étant tourné vers l'extérieur vers l'ouverture d'assemblage, et enfin le fond (35) est inséré dans le carter (2).

3. Procédé selon les revendications 1 et 2, **caractérisé en ce que** ledit fond (35) est pressé dans ledit carter (2) moyennant une presse, jusqu'à ce qu'il porte contre une butée intégrale avec le carter, et **en ce qu'**ensuite l'anneau de retenue type Seeger (29) est inséré dans la rainure formée à cette fin dans ledit carter (2) afin de fixer le dispositif.

4. Procédé selon les revendications 1 à 3, **caractérisé en ce qu'**après le relâchement de la pression de pressage, le fond (35) est pressé, sous la force de serrage desdits ressorts (16), en un sens axial vers l'extérieur contre ledit anneau de retenue type Seeger (29) et ferme ledit cylindre de serrage à action rapide (1).

5. Cylindre de serrage à action rapide (1) à un nipple d'entrée (17) afin de serrer un disque d'appui servant à fixer des pièces à usiner dans une machine d'usinage, dans lequel la force de serrage est engendrée par des ressorts tendeurs (16), et dans lequel un piston hydraulique (13) est disposé de façon à être actionné pour le desserrage, qui surmonte la force de serrage des ressorts tendeurs, **caractérisé en ce que** les composants fonctionnels, qui sont disposés dans son intérieur, sont fixés en leur position montée par le fond échangeable (35), qui est fixé, de manière détachable, sur le côté inférieur du cylindre de serrage à action rapide, et **en ce que** le cylindre de serrage à action rapide est fermé par cette action.

6. Cylindre de serrage à action rapide selon la revendication 5, **caractérisé en ce que** le fond (35) rend étanche la chambre d'huile (12) moyennant la bague d'étanchéité (28) et est fixé dans le cylindre de serrage à action rapide (1 ) moyennant un anneau de retenue type Seeger.

7. Cylindre de serrage à action rapide selon une quelconque des revendications 5 et 6, **caractérisé en ce que** le fond est configuré sous forme à deux pièces et est composé du fond (35) à un insert échangeable (45), qui est y fixé, de manière détachable, et qui présente un alésage central au milieu (52).

8. Cylindre de serrage à action rapide selon la revendication 7, **caractérisé en ce que** ledit insert (45) sert à distribuer, de façon sélective, de l'air de purge, à cet insert coopérant avec un passage annulaire (51) servant en tant que distributeur, avec des passages transversaux (47), avec un autre passage annulaire (48) disposé vers l'axe central, et avec des alésages de décharge joignants (49), auxquels des autres alésages de purge (50), qui s'étendent en sens radial en un sens vers l'intérieur et en haut, sont reliés.

9. Cylindre de serrage à action rapide selon une quelconque des revendications 5 et 6, **caractérisé en ce que** le fond à deux pièces est composé du fond (35) et d'un insert (53), audit insert (53) comprenant une saillie de centrage (55) pour le positionnement dans un système de coordonnés de la machine d'usinage.

10. Cylindre de serrage à action rapide selon une quelconque des revendications 5 à 9, **caractérisé en ce qu'**un raccord d'huile comprimé (59) est disposé dans le fond (35) pour l'alimentation de ladite chambre d'huile (12) en huile.

11. Cylindre de serrage à action rapide selon une quelconque des revendications 5 à 9, **caractérisé en ce qu'**un raccord d'huile (10) est disposé dans ledit carter (2) pour l'alimentation de ladite chambre d'huile en huile, et **en ce qu'**un orifice d'alimentation en air (30) est disposé dans ledit carter (2) pour l'alimentation de ladite chambre d'huile en huile, et **en ce qu'**un orifice d'alimentation en air (30) est disposé pour l'alimentation du cylindre de serrage à action rapide (1) en air comprimé.

12. Cylindre de serrage à action rapide selon une quelconque des revendications 5 à 11, **caractérisé en ce qu'**au moins une butée (25) conçue de façon élastique est disposée pour un ressort respectif (16), qui est relié au cylindre de façon intégrale avec le matériau.

13. Cylindre de serrage à action rapide selon une quelconque des revendications 5 à 12, **caractérisé en ce qu'**au moins une butée conçue de façon élastique est disposée pour un ressort respectif (16) sous forme d'un anneau de retenue type Seeger (24), qui est engagé dans une entaille (26) dans ledit carter (2).

14. Cylindre de serrage à action rapide selon une quelconque des revendications 5 à 13, **caractérisé en ce que** lesdites chambres de ressorts (38), qui servent à recevoir lesdits ressorts (16), sont remplies de l'air et sont rendues étanche afin d'empêcher la pénétration de l'huile hydraulique.

15. Cylindre de serrage à action rapide selon une quelconque des revendications 5 à 14, **caractérisé en ce qu'**un alésage à précision d'ajustage est axialement formé au milieu de ladite zone de couvercle (37), à travers lequel ledit nipple d'entrée (17) fait saillie.

16. Cylindre de serrage à action rapide selon une quelconque des revendications 5 à 14, **caractérisé en ce qu'**une bague de purge (6) à deux alésages de purge (7) est distribuée le long de sa périphérie est disposée dans ladite zone de couvercle (37), qui est reliée via un alésage transversal (31) audit orifice d'alimentation de l'air (30).

17. Cylindre de serrage à action rapide selon une quelconque des revendications 5 à 16, **caractérisé en ce qu'**un alésage transversal (31) sert à distribuer le courant de l'air comprimé à partir dudit orifice d'alimentation en air (30) en au moins deux courants d'air, à au moins un courant d'air étant guidé en une direction en bas vers ledit passage annulaire (51) et au moins un courant d'air en une direction en haut vers ladite bague de purge (6).

18. Cylindre de serrage à action rapide selon une quelconque des revendications 5 à 17, **caractérisé en ce que** la pression d'air dudit air comprimé peut être réglé au côté inférieur dudit nipple d'entrée moyennant un choix sélectif du diamètre d'alésage pour les conduites d'alimentation et de purge, et la distribution dudit courant d'air comprimé dans des courants partiels.

19. Cylindre de serrage à action rapide selon une quelconque des revendications 5 à 18, **caractérisé en ce qu'**un anneau torique (5) est disposé dans une rainure (4) à l'extérieur de ladite zone de couvercle (37), ledit anneau torique coopérant avec ledit disque d'appui afin de rendre étanche la zone de serrage entre le cylindre de serrage à action rapide et ledit disque d'appui.

20. Cylindre de serrage à action rapide selon une quelconque des revendications 5 à 19, **caractérisé en ce qu'**au moins un cylindre de serrage à action rapide (1 ) est apte à être fixé dans au moins une ouverture de réception (57) d'une table de machine (58), et **en ce que** la structure du cylindre de serrage à action rapide est conçue en correspondance avec les exigences sur l'étape de traitement respective.
